# EUROPEAN PATENT APPLICATION

(11) **EP 2 234 243 A1**
(43) Date of publication of application: **29.09.2010**
(21) Application number: 09703285.8
(22) Date of filing: 19.01.2009
(51) Int. Cl.: H02K 1/06, F16C 32/04, H02K 7/09

(54) **BEARING-LESS MOTOR**

(30) Priority: 24.01.2008 JP 2008014296
(71) Applicant: Tokyo University Of Science Educational Foundation Administrative Organization, Shinjuku-ku Tokyo 162-8601 (JP)
(72) Inventor: CHIBA, Akira, Tokyo 162-8601 (JP); TAKEMOTO, Masatsugu, Tokyo 157-0066 (JP); FUKAO, Tadashi, Yokohama-shi Kanagawa 227-0067 (JP)
(74) Representative: Cloughley, Peter Andrew
(86) International application number: PCT/JP2009/000162
(87) International publication number: WO 2009/093428

(57) **Abstract**

Provided is a bearingless motor capable of stably performing magnetic levitation and rotation even when a thrust disk is not provided and gap length is wide.

A unit 101 of a first bearingless motor is formed of a stator 41 and a core 61, while a unit 103 of a second bearingless motor is formed of a stator 43 and a core 63. A thrust magnetic bearing unit 102 formed of a core 62 and a stator 42 while having the functions of a thrust magnetic bearing is newly arranged between the unit 101 and the unit 103. A stator-side annular thrust permanent magnet 73 and a rotor-side annular thrust permanent magnet 81 are arranged between the unit 101 and the unit 103, while a stator-side annular thrust permanent magnet 75 and a rotor-side annular thrust permanent magnet 83 are arranged between the unit 102 and the unit 103.

## Description

### Technical field

The present invention relates to a bearingless motor, and particularly relates to a bearingless motor capable of stably performing magnetic levitation and rotation even when a thrust disk is not provided and gap length is wide.

### Background art

A bearingless motor has been energetically studied and developed inside and outside the country in order to realize a high-speed, high-power, and maintenance-free motor (see Non-patent Documents 1 to 5). The bearingless motor is an electric rotating machine formed by combining a motor and a magnetic bearing by arranging two kinds of windings, namely motor winding and suspension windings, around one stator, thereby the motor itself having the functions of the magnetic bearing. Since the rotor can be magnetically suspended in a noncontact manner, the bearingless motor does not cause friction or dust and does not require lubrication, which eliminates the need for periodic maintenance.

When such a bearingless motor is applied to a canned motor pump, an impeller combined with a rotor can be levitated and rotated in a completely noncontact manner without requiring seal (shaft seal), bearing, lubricating oil, etc., and thus a maintenance-free pump capable of transporting a clean liquid without causing dust can be realized (see Non-patent Documents 4 and 5).

However, in such a case, the surfaces of the stator and the rotor should be covered with bulkheads since liquid flows between the stator and the rotor. In addition, the bulkhead is required to have a large thickness and to be formed of resin such as Teflon (registered trademark) in order to obtain a high chemical resistant property, and thus the magnetic gap length between the stator core and the rotor core becomes 4 to 5 mm or greater, which is nearly 10 times wider than a normal length. The wide gap length increases magnetic resistance and makes it difficult to generate suspension force for suspending the rotor, which makes it difficult to stably perform magnetic levitation and rotation.

Accordingly, the inventors propose a 5-axis active control type bearingless motor capable of performing magnetic levitation and rotation in a completely noncontact manner with a sufficient suspension force even when the gap length is wide.

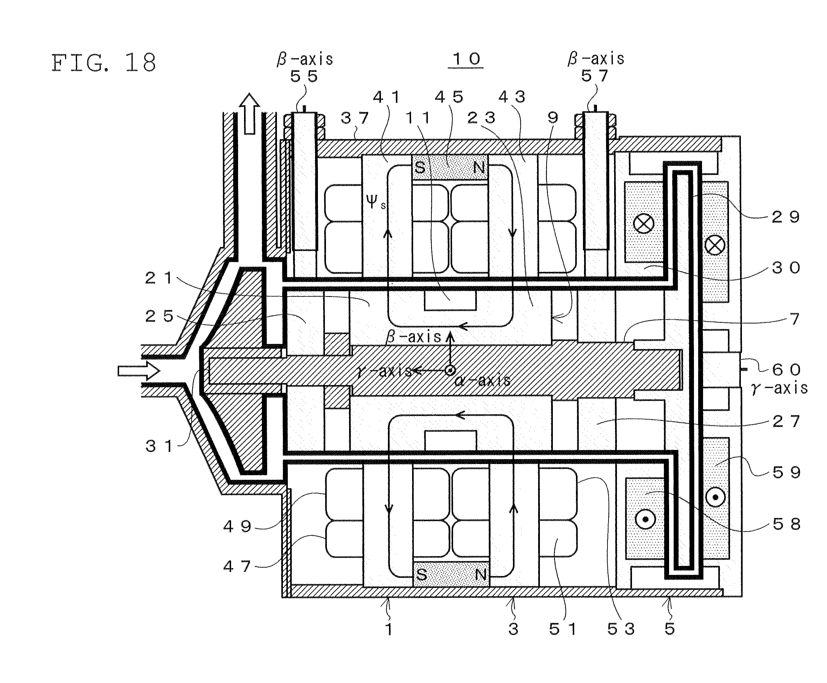

Fig. 18 shows an overall structural view of a conventional 5-axis active control type bearingless motor used for a canned motor pump.
In Fig. 18, a rotor 9 having an annular shape is fixed nearly around the middle of a rotor shaft 7 in its axial direction. A recess 11 is annularly and outwardly formed in the middle of the outer circumference of the rotor 9. A left annular salient 21 protrudes on the left side of the recess 11, while a right annular salient 23 protrudes on the right side of the recess 11.

A left sensor target 25, a right sensor target 27, the left annular salient 21, and the right annular salient 23, the latter two parts being included in the rotor, are cylindrically arranged to have the same dimension in the radial direction. A thrust disk 29, which is formed of a magnetic material and has a disk-like shape whose cylindrical diameter is far larger than that of the rotor shaft 7, is arranged at the right end of the rotor shaft 7.

Inside a case 37, a stator 41 and a stator 43 are arranged to face the left annular salient 21 and the right annular salient 23 respectively, with a predetermined gap therebetween. Motor windings 47 and radial suspension windings 49 are wound around the stator 41, while motor windings 51 and radial suspension windings 53 are wound around the stator 43. A bearingless motor (unit 1) is formed of the rotor 9, the stator 41, the motor windings 47, and the radial suspension windings 49, while a bearingless motor 3 (unit 2) is formed of the rotor 9, the stator 43, the motor windings 51, and the radial suspension windings 53.

A thrust stator core 30 is arranged on the left of the thrust disk 29. The thrust stator core 30 has an axial electromagnetic winding 58 for generating electromagnetic attractive force in the left direction of the thrust disk 29, while a stator core arranged on the side opposing the thrust stator core 30 with the thrust disk 29 therebetween includes an axial electromagnetic winding 59 for generating electromagnetic attractive force in the right direction of the thrust disk 29. A thrust magnetic bearing 5 is formed of the thrust disk 29, the axial electromagnetic winding 58, the core surrounding the axial electromagnetic winding 58, the axial electromagnetic winding 59, and the core surrounding the axial electromagnetic winding 59.

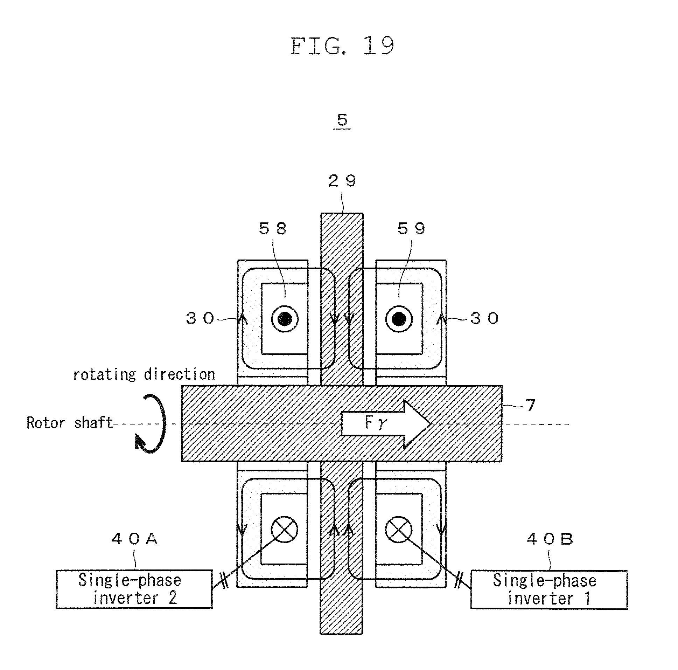

Fig. 19 shows a functional schematic diagram of the thrust magnetic bearing. As shown in Fig. 19, the axial electromagnet 58 and the axial electromagnet 59 are connected to a single-phase inverter 40A and a single-phase inverter 40B respectively, the single-phase inverters being independent of each other. The axial position signal of the rotor shaft 7 detected by a thrust gap sensor 60 is compensated by a compensator (not shown) based on PID compensation etc.

Based on the compensated signal, the single-phase inverter 40A and the single-phase inverter 40B supply current to the axial electromagnet 58 and the axial electromagnet 59 respectively. As a result, the thrust disk 29 is attracted by the axial electromagnet 58 or the axial electromagnet 59 to adjust the axial position of the rotor shaft 7.

Specifically, this 5-axis active control type bearingless motor 10 has the bearingless motor 1 arranged in the unit 1, the bearingless motor 3 arranged in the unit 2, and the thrust magnetic bearing 5.

As a result of the 5-axis active suspension control performed on the rotor shaft 7 combined with an impeller 31, magnetic levitation and rotation can be performed in a completely noncontact manner and consumables such as a shaft seal (seal), bearing, and lubricating oil are unnecessary. Accordingly, a pump having the following excellent features can be realized: (1) transportation of a clean liquid without causing dust; (2) long life, high reliability, and maintenance-free environment; (3) excellent chemical resistant property; and (4) capability of high-speed rotation (high lift).

However, in such a case, the surfaces of the stator and the rotor should be covered with bulkheads since liquid flowing through the pump flows between the stator and the rotor. In addition, the bulkhead is required to have a large thickness and to be formed of resin such as Teflon in order to obtain a high chemical resistant property, and thus the magnetic gap length between the stator core and the rotor core becomes 4 to 5 mm or greater, which is nearly 10 times wider than a normal length.

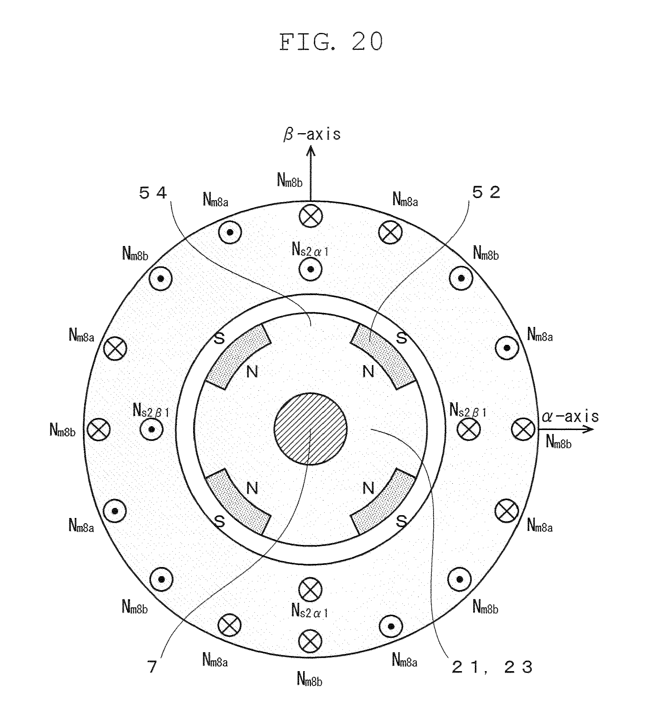

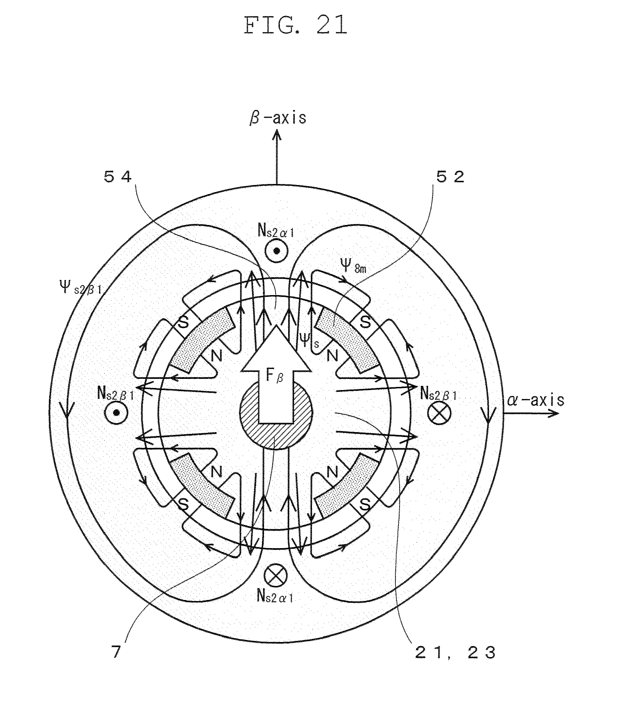

Next, the structure of the stator and the rotor and a principle of how the radial suspension force is generated will be explained.
Each of Fig. 20 and Fig. 21 shows a sectional view of the stator and the rotor of the bearingless motor of the unit 1. Each unit of the rotor 9 has four radial permanent magnets 52 of sector shape. All of the four radial permanent magnets are similarly magnetized in the radial direction, and the core portion between the radial permanent magnets consequently forms a pole due to a field magnetic flux ψ8m generated by the radial permanent magnet 52, thereby an eight-pole motor having a consequent-pole structure being formed.

As shown in Fig. 20, eight-pole motor windings Nm8a and Nm8β and two-pole radial suspension windings Ns2a1 and Ns2β1 are equivalent two-phase windings on the coordinate of the stator, which is achieved by performing three-phase to two-phase transformation on the actual eight-pole motor windings and two-pole radial suspension windings serving as three-phase concentrated windings. Since each unit individually has the radial suspension windings, each unit can independently perform radial suspension control.

Fig. 21 shows a principle of how the radial suspension force is generated by the unit 1. Since the magnetic resistance in the gap portion is high due to a wide gap length, it is difficult to generate sufficient radial suspension force with a normal consequent-pole type structure. Accordingly, as shown in Fig. 18, an annular thrust permanent magnet 45 is arranged between the stators of the two units to generate a bias magnetic flux Ψs penetrating through the rotor in the axial direction.

The bias magnetic flux Ψs generated by the annular thrust permanent magnet 45 is added to the field magnetic flux Ψ8m generated by the radial permanent magnet 52 and flows through a radial permanent magnet-sided core portion 54 of each unit in the same direction, which increases the magnetic flux density in the gap around the radial permanent magnet-sided core portion 54. Here, radial suspension magnetic flux Ψs2β1 is generated by passing direct current is 2β1 through the radial suspension winding Ns2β1, and magnetic fluxes in the upper gap around the rotor strengthen each other while those in the lower gap around the rotor weaken each other.

As a result, radial suspension force Fβ is generated in the rotor in the positive β-axis direction, in which the density of magnetic flux becomes higher. The bias magnetic flux Ψs increases the density of the bias magnetic flux generating the radial suspension force in the gap around the radial permanent magnet-sided core portion 54, which makes it possible to generate a great radial suspension force even when the gap length is wide. Similarly to a normal consequent-pole type structure, radial suspension can be performed with direct current regardless of the rotational angle.

Note that an example of a conventional 4-axis active control type bearingless motor having a passively-controlled thrust magnetic bearing is disclosed (Patent Document 1).

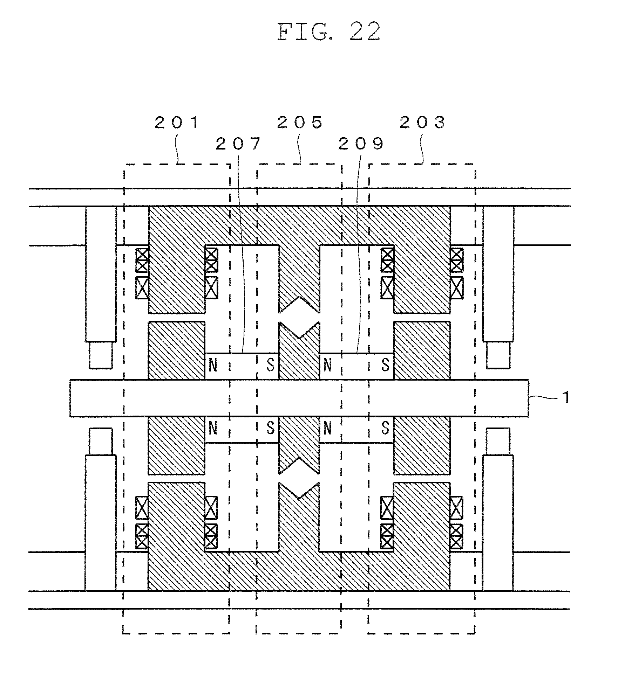

In this example, as shown in a simplified cross sectional block diagram of Fig. 22, a passive thrust magnetic bearing 205 is arranged between a driving unit 201 serving as a motor and a radial magnetic bearing and a driving unit 203 similarly formed. A rotor shaft has a permanent magnet 207 and a permanent magnet 209 arranged between the driving unit 201 and the passive thrust magnetic bearing 205 and between the driving unit 203 and the passive thrust magnetic bearing 205 respectively so that two closed-loop magnetic paths are formed.

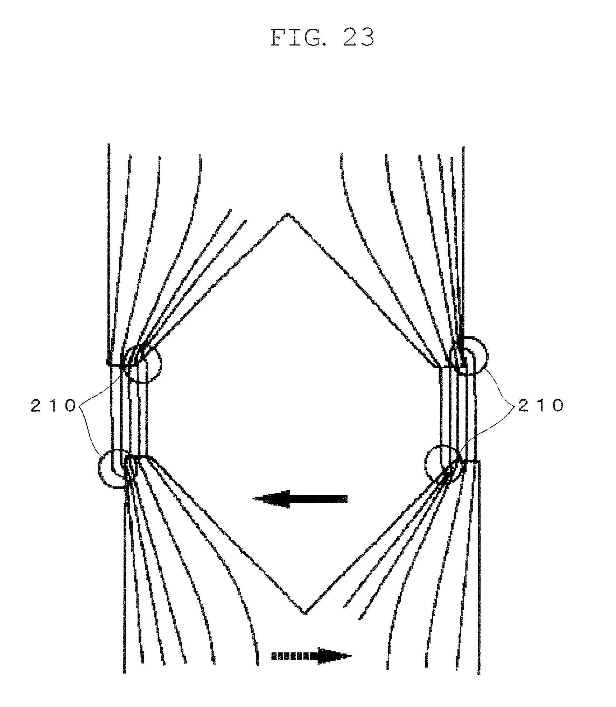

Fig. 23 shows a mechanism of how the passive thrust magnetic bearing generates magnetic shear force in the rotational axis direction. The passive thrust magnetic bearing 205 has a tapered magnetic pole, and magnetic flux sneaks (leaks) at the end of this magnetic pole, thereby the shear force for pulling back the rotor shaft being generated.
[Non-patent Document 1] T. Suzuki, A. Chiba, M. A. Rahman, and T. Fukao, "An air-gap-magnetic flux-oriented vector controller for stable operation of bearingless induction motors," IEEE Trans. on Industry Applications, Vol. 36, No. 4, pp. 1069-1076, July/Aug. 2000.
[Non-patent Document 2] Oshima, Miyazawa, Chiba, Nakamura, Fukao, "Identification Methods of Radial Force Parameters for Salient-pole Permanent Magnet Synchronous Bearingless Motors" The Transactions of the Institute of Electrical Engineers of Japan D, Vol. 124-D, No. 8, pp. 784-791, 2004
[Non-patent Document 3] M. Takemoto, M. Uyama, A. Chiba, H. Akagi, and T. Fukao, "A Deeply-Buried Permanent Magnet Bearingless Motor with 2-pole Motor Windings and 4-pole Suspension Windings," in Conf. Rec. of the 2003 IEEE-IAS Annual Meeting, Salt Lake City, USA, Oct. 2003, pp. 1413-1420
[Non-patent Document 4] T. Satoh, S. Mori, and M. Ohsawa, "Study of induction type bearingless canned motor pump," in Proc. IPEC-Tokyo 2000, Tokyo, Japan, 2000, pp.389-394.
[Non-patent Document 5] C. Redemann, P. Meuter, A. Ramella, and T. Gempp, "Development and prototype of a 30 kW bearingless canned motor pump," in Proc. IPEC-Tokyo 2000, Tokyo, Japan, 2000, pp.377-382.
[Patent Document 1] Japanese Patent Laid-Open Pub. No. 5-272537

### Disclosure of the Invention

### Problems to be solved by the Invention

The 5-axis active control type bearingless motor 10, which is a conventional type having a thrust disk, additionally has the thrust magnetic bearing 5 to control the rotor position in the γ-axis direction. By passing direct current through the thrust disk 29, which serves as a part of the rotor and has the thrust stator 30 and winding on its each side in a sandwiched manner, the density of magnetic flux in the gap on the left side of the thrust disk 29 and that on the right side get unbalanced and thrust suspension force is generated in the γ-axis direction.

By controlling the amount of current flowing through the thrust suspension winding, thrust suspension force can be actively controlled. Since the outside diameter of the thrust disk 29 is large compared to the other parts of the rotor, the peripheral speed of the outer circumferential part of the thrust disk 29 becomes high compared to the other parts of the rotor.

When such a concavo-convex shaped rotor including the thrust disk 29 with a large diameter is used for a canned motor pump having a gap through which liquid flows, rotational speed should be limited since there is a problem that cavitation caused around the thrust disk 29 may break the thrust magnetic bearing 5. Therefore, the rotor is required to have a flat cylindrical shape without the thrust disk 29 in order to prevent the cavitation.

Further, the conventional 5-axis active control type bearingless motor 10 having the thrust disk has the following problems concerning the ripple and deflection of the radial suspension force.

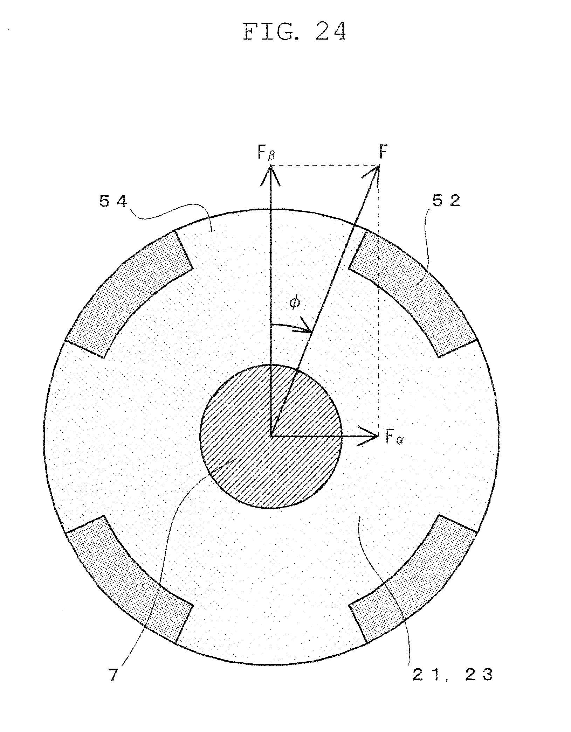

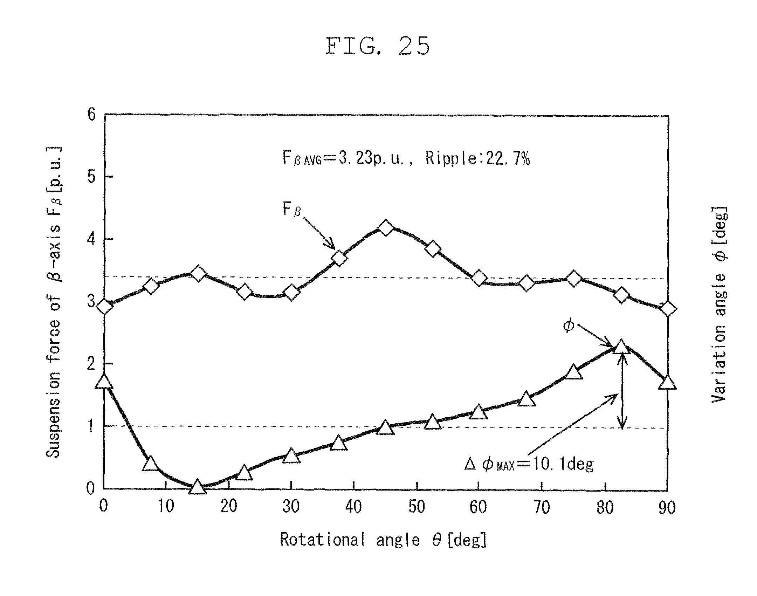

Fig. 24 shows a definition of the direction in which the radial suspension force is generated, while Fig. 25 shows an analysis result of radial suspension force characteristics. Note that the analysis is performed under the following current conditions.
■In each of the units 1 and 2, command is given to generate the radial suspension force in the positive β-axis direction.
■ Radial suspension current is2β1 and is2β2 = 5.54A (constant rated value, direct current)
■ Radial suspension current is2α1 and is2α2 = 0A
■ Motor torque current im8q = 13.9A (constant rated value, alternating current)
■ Rotor rotational angle θ = 0 to 90 deg. (at 7.5 deg. intervals)

The analysis is performed by passing radial suspension current so that the radial suspension force is generated in the positive β-axis direction. However, force in the α-axial direction is actually generated due to the rotor having a rotational angle at which the magnetic flux does not symmetrically flow with respect to the β-axis or the interference between the motor magnetic flux generated by the motor current and the radial suspension magnetic flux.

Here, as shown in Fig. 24, the angle difference from the positive β-αxis direction, which is the required direction, is defined as a deflection ϕ. Fig. 25 shows that the radial suspension force Fβ in the β-axis direction has a mean value of 3.23 p.u.

However, the magnitude of the radial suspension force ripples according to the change of the rotational angle, and a large ripple ratio of 22.7% is obtained. Further, the deflection ϕ is 10.1 deg. at the maximum. Since the stability of the radial suspension control system deteriorates when ripple and deflection are generated in the radial suspension force depending on the rotational angle, the motor requires any idea for prevent the ripple and deflection in the radial suspension force.

In the bearingless motor described in Patent Document 1, the force for adjusting the axial position is passively obtained by using the leakage fluxes of the permanent magnets 207 and 209. When such a passive structure is employed, there is a fear that disturbance is fixedly concluded and thus a considerably long conclusion time is required. Therefore, it is assumed that such a bearingless motor can be applied to a simple facility, but cannot be easily applied to a case where control in the axial direction is performed with great force and high accuracy.

Further, in Patent Document 1, thrust force is generated by partially using the fluxes leaked from the magnetic fluxes of the permanent magnets 207 and 209 (encircled portions 210 in Fig. 23). In Patent Document 1, in which the adjustment force is passively generated and is formed of only leakage fluxes from the permanent magnets, considerably large permanent magnets should be employed in order to conclude the displacement caused by the disturbance etc. in the axial direction when considering a case where great force of an impeller etc. acts as disturbance.

In addition, the thrust force in Patent Document 1 is estimated to be small since it is generated not by using all of the magnetic fluxes generated by the permanent magnets 207 and 209 but by using merely partial leakage fluxes.

The present invention has been made in view of the above conventional problems. An object of the present invention is to provide a bearingless motor capable of stably performing magnetic levitation and rotation even when a thrust disk is not provided and gap length is wide.

### Means for solving the Problems

Accordingly, the present invention (claim 1) provides a bearingless motor including: a rotor; a first bearingless motor unit having a first motor magnetomotive force generator for generating a rotational magnetomotive force to rotate the rotor and a first suspension magnetomotive force generator for generating a suspension magnetomotive force to suspend the rotor in a radial direction; a second bearingless motor unit having a second motor magnetomotive force generator for generating a rotational magnetomotive force to rotate the rotor and a second suspension magnetomotive force generator for generating a suspension magnetomotive force to suspend the rotor in a radial direction; a magnetic flux generator for generating a magnetic flux between the first bearingless motor unit and the second bearingless motor unit; and a thrust force generator for generating a magnetomotive force in a thrust direction by adding or canceling the magnetic flux generated by the magnetic flux generator with respect to a magnetic flux of the first bearingless motor unit and a magnetic flux of the second bearingless motor unit.

Further, the present invention (claim 2) provides a bearingless motor in which the rotor has permanent magnets so that the magnetomotive force in the thrust direction does not interfere with each of the suspension magnetomotive forces.

Furthermore, the present invention (claim 3) provides a bearingless motor including: a first bearingless motor unit having a first stator formed by winding first motor windings and first suspension windings around a same core and a first rotor having first radial permanent magnets circumferentially arranged to be magnetized in a radial direction, the first rotor being arranged inside or outside the first stator to face the first stator with a predetermined gap therebetween; a second bearingless motor unit having a second stator formed by winding second motor windings and second suspension windings around a same core and a second rotor having second radial permanent magnets circumferentially arranged to be magnetized in a radial direction, the second rotor being arranged inside or outside the second stator to face the second stator with a predetermined gap therebetween; a thrust magnetic bearing unit having a third stator around which a thrust suspension winding is wound to surround a rotor shaft, the third stator being arranged between the first stator and the second stator, and a third rotor arranged inside or outside the third stator to face the third stator with a predetermined gap therebetween; a first thrust permanent magnet which is arranged between the first stator and the third stator and is magnetized in an axial direction; and a second thrust permanent magnet which is arranged between the second stator and the third stator and is magnetized in an axial direction, in which each of the first rotor and the second rotor is formed by connecting or combining, in an axial direction, a first rotor part having the radial permanent magnets and a second rotor part formed of a core without the radial permanent magnets, the second rotor part being connected to or combined with the third rotor.

The thrust suspension winding is wound around the rotor shaft. The direct current passed through the thrust suspension winding makes it possible, depending on its direction, to strengthen the bias magnetic flux passing through the gap in the first bearingless motor unit while weakening the bias magnetic flux passing through the gap in the second bearingless motor unit, and to contrarily strengthen the bias magnetic flux passing through the gap in the second bearingless motor unit while weakening the bias magnetic flux passing through the gap in the first bearingless motor unit. In this way, the rotor can be controlled in the axial direction. Accordingly, the rotor can be formed to have a cylindrical shape without a thrust disk.

Conventionally, two axial electromagnets are required to control the thrust disk in the axial direction so that the thrust disk is controlled both in the positive direction and the negative direction of the main axis, and a control circuit corresponding to each of the axial electromagnets is further required. In the present invention, the control circuit changes the direction of current flowing through only one thrust suspension winding wound around the rotor shaft, thereby control both in the positive direction and the negative direction of the main axis being realized.

Further, since magnetic flux generated by the thrust suspension winding is added to fixed bias magnetic fluxes generated by the bearingless motor units, thrust force can be generated by adjusting the density of magnetic flux by the current flowing through the thrust winding. Further, bias current required for the thrust magnetic bearing can be omitted, and thrust suspension force is sufficiently great even when the amount of current flowing through the thrust suspension winding is small.

Note that the present invention can be applied to both of an inner rotor type and an outer rotor type. Further, the end part having the permanent magnets in each of the first rotor part and the second rotor part may be a consequent type or may be an surface attachment type in which the radial permanent magnets are arranged around the entire circumference of the rotor.

Further, the present invention (claim 4) provides a bearingless motor including: a first bearingless motor unit having a first stator formed by winding first motor windings and first suspension windings around a same core and a first rotor having first radial permanent magnets circumferentially arranged to be magnetized in a radial direction, the first rotor being arranged inside or outside the first stator to face the first stator with a predetermined gap therebetween; a second bearingless motor unit having a second stator formed by winding second motor windings and second suspension windings around a same core and a second rotor having second radial permanent magnets circumferentially arranged to be magnetized in a radial direction, the second rotor being arranged inside or outside the second stator to face the second stator with a predetermined gap therebetween; a thrust magnetic bearing unit having a third stator around which a thrust suspension winding is wound to surround a rotor shaft, the third stator being arranged between the first stator and the second stator, and a third rotor arranged inside or outside the third stator to face the third stator with a predetermined gap therebetween; a first thrust permanent magnet which is arranged between the first stator and the third stator and is magnetized in an axial direction; a second thrust permanent magnet which is arranged between the second stator and the third stator and is magnetized in an axial direction; a third thrust permanent magnet which is arranged between the first rotor and the third rotor and is magnetized in an axial direction; and a fourth thrust permanent magnet which is arranged between the second rotor and the third rotor and is magnetized in an axial direction, in which each of the first rotor and the second rotor is formed by connecting or combining, in an axial direction, a first rotor part having the radial permanent magnets and a second rotor part formed of a core without the radial permanent magnets.

When magnetic flux is shared, there is a fear that the magnetic flux of the thrust winding flows into the rotor portion of the bearingless motor unit for generating radial electromagnetic force and thus thrust force and radial force interfere with each other. In view of this, the third thrust permanent magnet and the fourth thrust permanent magnet each being magnetized in the thrust direction are arranged around the main shaft. As a result, magnetic resistance is heightened and thrust magnetic flux does not leak.

Therefore, noninterference between thrust electromagnetic force and radial electromagnetic force can be achieved, and magnetic flux passing through the gap in the thrust magnetic bearing unit can be independently strengthened or weakened efficiently. Accordingly, axial position control can be performed with high accuracy. Here, the noninterference means to make the interference level as lower as possible without causing any practical problem.

Further, the present invention provides a bearingless motor including: a first bearingless motor unit having a first stator formed by winding first motor windings and first suspension windings around a same core and a first rotor having first radial permanent magnets circumferentially arranged to be magnetized in a radial direction, the first rotor being arranged inside or outside the first stator to face the first stator with a predetermined gap therebetween; and a second bearingless motor unit having a second stator formed by winding second motor windings and second suspension windings around a same core and a second rotor having second radial permanent magnets circumferentially arranged to be magnetized in a radial direction, the second rotor being arranged inside or outside the second stator to face the second stator with a predetermined gap therebetween, in which each of the first rotor and the second rotor is formed by connecting or combining, in an axial direction, a first rotor part having the radial permanent magnets and a second rotor part formed of a core without the radial permanent magnets, and in which the first radial permanent magnets and the second radial permanent magnets are arranged on the entire circumferences of the first rotor and the second rotor respectively so that the number of magnetic poles becomes 2+4n and so that the first motor windings and the second motor windings are wound corresponding to the pole number.

By setting the number of magnetic poles to be 2+4n poles, the radial permanent magnets of the first rotor part generates magnetic flux which flows in the same the direction both in the points 180 deg. apart from each other in the circumferential direction of the first rotor part.

Accordingly, the combined magnetic flux formed of the magnetic flux generated by the radial permanent magnets and the bias magnetic flux passing through the first rotor part, both of which flow in the same direction, has the same magnitude both in the gap points 180 deg. apart from each other in the circumferential direction. Therefore, ripple in the radial suspension force supposed to be caused by rotating the rotor is reduced, and is not caused in principle.

On the other hand, the bias magnetic flux radially flows through the second rotor part of each of the first rotor and the second rotor, the second rotor part being a mere core without any radial permanent magnet. Therefore, the combined magnetic flux formed of the magnetic flux generated by the radial permanent magnets and the bias magnetic flux does not have the same magnitude in the gap points 180 deg. apart from each other in the circumferential direction, and is increased or decreased. Accordingly, the radial suspension force can be efficiently generated and suitably controlled. Note that the present invention can be employed regard of whether or not the functions of a thrust magnetic bearing are provided.

Further, the present invention provides a bearingless motor including: a first bearingless motor unit having a first stator formed by winding first motor windings and first suspension windings around a same core and a first rotor having first radial permanent magnets circumferentially arranged to be magnetized in a radial direction, the first rotor being arranged inside or outside the first stator to face the first stator with a predetermined gap therebetween; and a second bearingless motor unit having a second stator formed by winding second motor windings and second suspension windings around a same core and a second rotor having second radial permanent magnets circumferentially arranged to be magnetized in a radial direction, the second rotor being arranged inside or outside the second stator to face the second stator with a predetermined gap therebetween, in which each of the first rotor and the second rotor is formed by connecting or combining, in an axial direction, a first rotor part having the radial permanent magnets and a second rotor part formed of a core without the radial permanent magnets, and in which the first radial permanent magnets and the second radial permanent magnets are arranged in a consequent pole manner in the first rotor and the second rotor respectively so that the number of magnetic poles becomes 2 and so that the first motor windings and the second motor windings are wound corresponding to the pole number.

Even when the consequent-pole type structure is employed, the above effect can be similarly obtained. Therefore, ripple is not caused in the radial suspension force.

### Effect of the Invention

As explained above, according to the present invention, the thrust magnetic bearing unit including the stator having the thrust suspension winding wound around the rotor shaft and the rotor part facing this stator with a predetermined gap therebetween is arranged between the first bearingless motor unit and the second bearingless motor unit, which makes it possible to control the rotor in the axial direction by strengthening or weakening the bias magnetic flux passing through the gap in the bearingless motor unit. Accordingly, the rotor can be formed to have a cylindrical shape without a thrust disk.

### Brief description of the drawings

[Fig. 1] A block diagram of a 5-axis active control type bearingless motor according to a first embodiment of the present invention
[Fig. 2] An enlarged perspective structural view of a rotor and a stator according to the first embodiment of the present invention
[Fig. 3] Thrust suspension force characteristics in the γ-axis direction
[Fig. 4] Radial suspension force characteristics in the β-axis direction
[Fig. 5] A principle of how ripple is caused in the radial suspension force in the β-axis direction (Rotational angle θ=0 deg.)
[Fig. 6] A principle of how ripple is caused in the radial suspension force in the β-axis direction (Rotational angle θ = 45 deg.)
[Fig. 7] A front view of a rotor of a 5-axis active control type bearingless motor according to a second embodiment of the present invention
[Fig. 8] An overall perspective view of the rotor
[Fig. 9] An enlarged perspective structural view of the entire motor unit
[Fig. 10] A principle of how the radial suspension force is generated in the 5-axis active control type bearingless motor according to the second embodiment of the present invention
   (Radial permanent magnet portion)
[Fig. 11] A principle of how the radial suspension force is generated in the 5-axis active control type bearingless motor according to the second embodiment of the present invention
   (Cylinder portion)
[Fig. 12] Suspension force characteristics of a structure for preventing the ripple in the radial suspension force
[Fig. 13] γ-axis suspension force characteristics of a structure for preventing the ripple in the radial suspension force
[Fig. 14] Torque characteristics
[Fig. 15] A relationship between motor torque current im6q and mean value FβAVG of the radial suspension force in the β-axis direction
[Fig. 16] Starting characteristics of thrust suspension of the 5-axis active control type bearingless motor
[Fig. 17] Starting characteristics of thrust suspension of the 5-axis active control type bearingless motor (Experiment for comparing an active type with a passive type)
[Fig. 18] An overall structural view of a conventional 5-axis active control type bearingless motor
[Fig. 19] A conventional active control type thrust magnetic bearing
[Fig. 20] A sectional view of a stator and a rotor of a bearingless motor
[Fig. 21] A principle of how the radial suspension force is generated
[Fig. 22] An overall structural view of a conventional 5-axis active control type bearingless motor (described in Patent document 1)
[Fig. 23] A diagram showing a mechanism of how magnetic shear force is generated in the rotational axis direction (described in Patent document 1)
[Fig. 24] A direction in which the radial suspension force is generated
[Fig. 25] An analysis result of radial suspension force characteristics

### Description of Symbols

7: Rotor shaft
25: Left sensor target
27: Right sensor target
31: Impeller
33: Pump inlet port
35: Pump discharge port
37: Case
41, 42, 43: Stator
47: Motor winding
49, 53: Radial suspension winding
51: Motor winding
52, 91, 191: Radial permanent magnet
54: Radial permanent magnet-sided core portion
55: Radial gap sensor
57: Radial gap sensor
60: Thrust gap sensor
61, 62, 63: Core
61a: Axial left half
61b: Axial right half
63a: Axial right half
63b: Axial left half
71: Thrust suspension winding
73, 75: Stator-side annular thrust permanent magnet
81, 83: Rotor-side annular thrust permanent magnet
100: 5-axis active control type bearingless motor
101, 103: Bearingless motor unit
102: Thrust magnetic bearing unit

### Best mode for carrying out the Invention

Hereinafter, embodiments of the present invention will be explained. First, a first embodiment of the present invention proposes a new structure capable of performing 5-axis active control while forming the rotor into an entirely cylindrical shape by removing a thrust disk considered as one of the conventional structural problems.

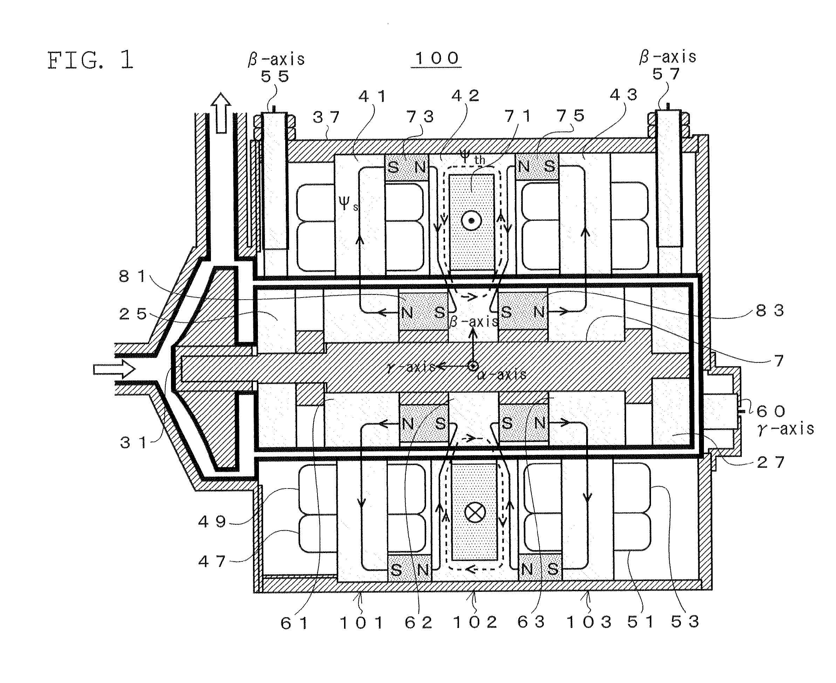

Fig. 1 shows a block diagram of the first embodiment of the present invention. Note that the same components as those in Fig. 18 are given the same symbols, and the explanation thereof will be omitted.

In Fig. 1, a 5-axis active control type bearingless motor 100 excluding a thrust disk has rotor cores divided into three blocks. Specifically, a first bearingless motor unit 101 is formed of the stator 41 and a core 61 arranged to face each other, while a second bearingless motor unit 103 is formed of the stator 43 and a core 63.

A thrust magnetic bearing unit 102 formed of a core 62 and a stator 42 while having the functions of a thrust magnetic bearing is newly arranged between the unit 101 and the unit 103. Here, the core 62 is arranged between the core 61 and the core 63, while the stator 42 is arranged between the stator 41 and the stator 43.

Inside the stator, a thrust suspension winding 71 is wound around the rotor shaft 7. A stator-side annular thrust permanent magnet 73, which is formed to surround the rotor shaft 7 and is magnetized in the axial direction, is arranged on the inner circumferential surface of the case 37 between the stator 41 and the stator 42.

Similarly, a stator-side annular thrust permanent magnet 75, which is formed to surround the rotor shaft 7 and is magnetized in the axial direction, is arranged on the inner circumferential surface of the case 37 between the stator 42 and the stator 43. The opposed faces of the stator-side annular thrust permanent magnet 73 and the stator-side annular thrust permanent magnet 75 are both N poles and are magnetized in the axial direction.

A rotor-side annular thrust permanent magnet 81, which is formed to surround the rotor shaft 7 and is magnetized in the axial direction, is arranged between the core 61 and the core 62, while a rotor-side annular thrust permanent magnet 83, which is formed to surround the rotor shaft 7 while being magnetized in the axial direction, is similarly arranged between the core 62 and the core 63. The opposed faces of the rotor-side annular thrust permanent magnet 81 and the rotor-side annular thrust permanent magnet 83 are both S poles and are magnetized in the axial direction.

With the above structure, the bias magnetic flux Ψs as shown in Fig. 1 is generated by the stator-side annular thrust permanent magnet 73 and the rotor-side annular thrust permanent magnets 81 respectively arranged on the stator and rotor between the unit 101 and the unit 102, and by the stator-side annular thrust permanent magnet 75 and the rotor-side annular thrust permanent magnet 83 respectively arranged on the stator and rotor between the unit 102 and the unit 103.

Here, a thrust suspension magnetic flux Ψth is generated by passing direct current through the thrust suspension winding 71, and the bias magnetic flux Ψs and the thrust suspension magnetic flux Ψth are combined, by which the magnetic fluxes strengthen each other in the gap on the left side of the thrust magnetic bearing unit 102 while weakening each other in the gap on the right side of the thrust magnetic bearing unit 102. As a result, thrust suspension force Fγ is generated in the positive γ-axis direction, in which the density of magnetic flux becomes higher.

Here, all of the thrust suspension magnetic flux Ψth is effectively used to be added to or to cancel the bias magnetic flux Ψs. On the other hand, in Patent Document 1, the main magnetic flux flowing through the magnetic pole does not effectively make much contribution to thrust suspension force, and only sneaking leakage flux acts to pull the rotor shaft back. Therefore, in the present embodiment, since all of the bias magnetic flux can be effectively used, efficient control can be performed while achieving downsizing.

Note that the rotor in the present embodiment has the rotor-side annular thrust permanent magnets 81 and 83, which is because the magnetic flux density in the gap in the thrust magnetic bearing unit 102 should be heightened in order to generate great thrust suspension force when a thrust disk is not provided and gap length is wide. Further, in the present embodiment, each of the rotor-side annular thrust permanent magnets 81 and 83 having high magnetic resistance is arranged between the units, by which the thrust suspension magnetic flux Ψth hardly flows through the bearingless motor units 101 and 103 and thus hardly interferes with the radial suspension magnetic flux.

Further, in the present embodiment, the rotor has an entirely cylindrical shape by removing the thrust disk 29 having a large diameter used in the conventional structure, and thus enables to prevent the cavitation caused by the thrust disk 29 when the rotor is used for a canned motor pump, thereby the problem that the rotational speed is limited by the thrust disk 29 being solved.

As explained in Fig. 19, two single-phase inverters are required for the conventional current driver, while in the present embodiment only one single-phase inverter is required for the thrust suspension winding 71. Therefore, reduction in cost can be realized.

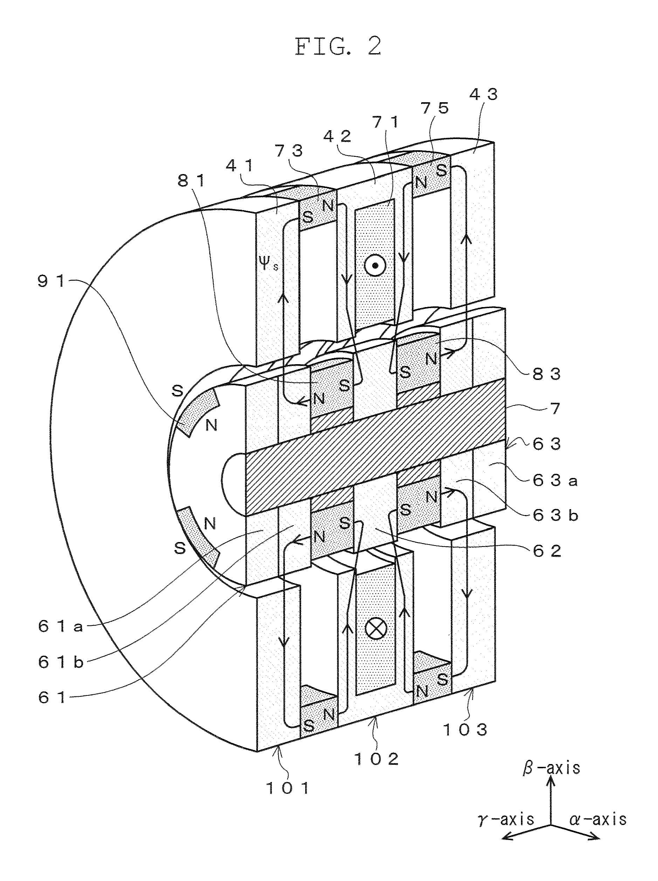

Fig. 2 shows an enlarged perspective structural view of the rotor and the stator of the 5-axis active control type bearingless motor 100 according to the first embodiment of the present invention.

Each of the rotor core and the stator core in Fig. 2 has the shape and dimension similar to those of the 5-axis active control type bearingless motor 10 having a conventional structure. In Fig. 2, four radial permanent magnets 91 are implanted in an axial left half 61a of the core 61 to achieve a consequent-pole type structure having eight poles. On the other hand, an axial right half 61b of the core 61 has a cylindrical shape without any permanent magnet.

Similarly, four radial permanent magnets 91 are implanted in an axial right half 63a of the core 63 to achieve a consequent-pole type structure having eight poles. On the other hand, an axial left half 63b of the core 63 has a cylindrical shape without any permanent magnet. The stator has eight-pole motor windings and two-pole radial suspension windings.
Next, an analysis result of thrust/radial suspension force characteristics of the 5-axis active control type bearingless motor according to the first embodiment of the present invention will be explained.

A 3D-FEM analysis is performed to verify if the 5-axis active control type bearingless motor 100 can generate sufficient suspension force both in the axial direction and the radial direction. Following current conditions are employed.
■In each of the units 1 and 2, command is given to generate the radial suspension force in the positive β-axis direction.
■ Radial suspension current is2β1 and is2β2 = 5.54A
   (constant rated value, direct current)
■ Radial suspension current is2α1 and is2α2 = 0A
■Thrust current ith=3.39A (constant rated value, alternating current)
■ Motor torque current im8q = 13.9A (constant rated value, alternating current)
■ Rotor rotational angle θ = 0 to 90 deg. (at 7.5 deg. intervals)

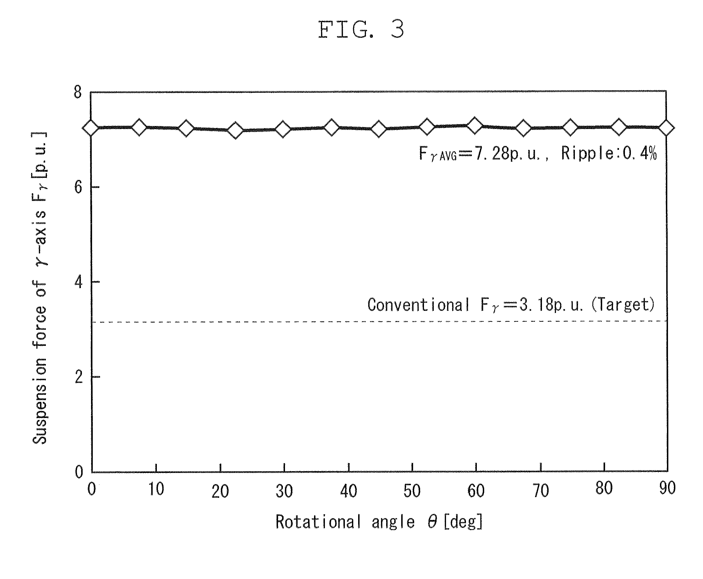

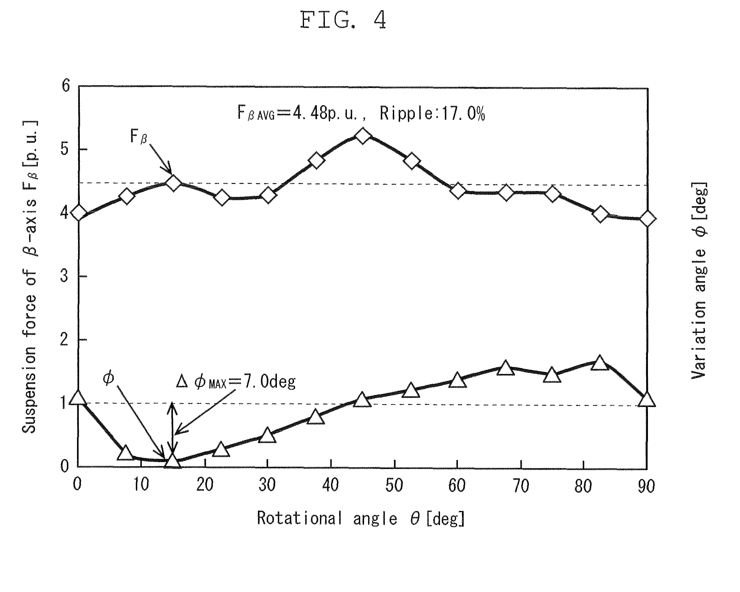

The analysis is performed by simultaneously passing rated current through three kinds of windings, namely the radial suspension windings 49 and 53, the thrust suspension winding 71, and the motor windings 47 and 51. The force required to magnetically suspend the rotor in itself is defined as a reference value of 1.0 p.u. Fig. 3 shows thrust suspension force characteristics in the γ-axis direction, and Fig. 4 shows radial suspension force characteristics in the β-axis direction.

Fig. 3 shows that the thrust suspension force Fγ in the γ-axis direction is sufficiently great and is two or more times greater than the target value 3.27 p.u. obtained when the thrust disk 29 is conventionally used. Further, when the rotor is rotated with the rated current simultaneously flowing through the radial suspension windings 49 and 53 and the motor windings 47 and 51, the ripple ratio of Fγ is 0.4% and is extremely low, and thus thrust suspension control can be stably performed.

Further, Fig. 4 shows the radial suspension force Fβ in the β-axis direction is 4.48 p.u. on average, which is sufficiently great and is four or more times greater than the required suspension force. The thrust permanent magnets 73, 75, 81, and 83 arranged between the bearing less motor units 101 and 103 allow the bias magnetic flux Ψs plentifully flow through the core portion between the radial permanent magnets 91, and thus the value of radial suspension force is greater than that of the conventional type.

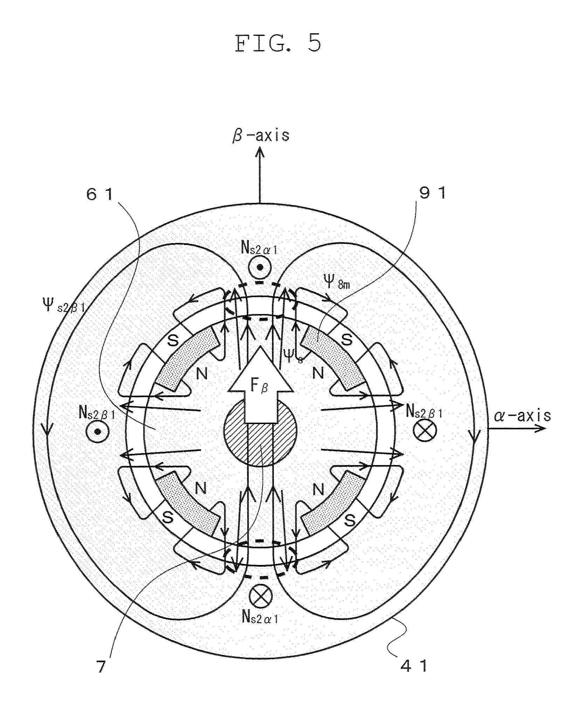

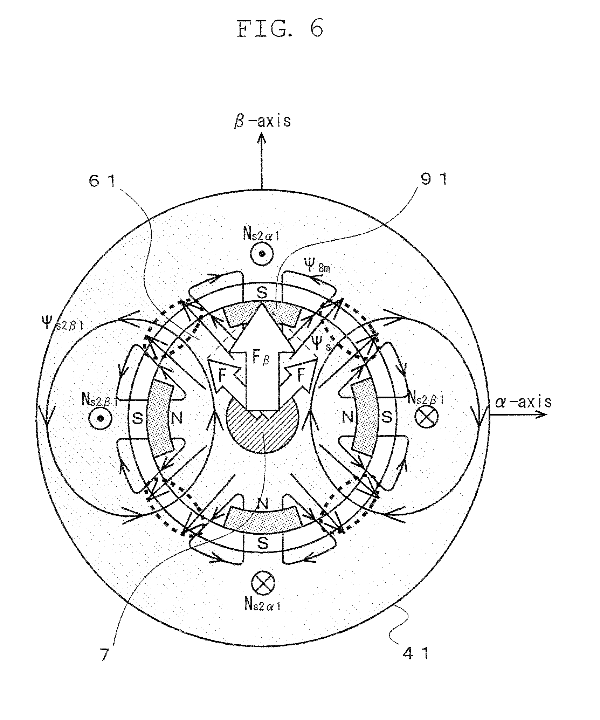

However, since each of the units 101 and 103 of the rotor is structured similarly to the conventional type, the radial suspension force has a ripple ratio of 17.0% and the deflection ϕ is 7.0 deg., which shows that ripple and deflection are generated in the radial suspension force depending on the rotational angle. Each of Fig. 5 and Fig. 6 shows a principle of how ripple is caused in the radial suspension force in the β-axis direction. The radial suspension magnetic flux Ψs2β1 mainly flows through the core portion between the radial permanent magnets 91 having low magnetic resistance, and thus, as shown in Fig. 5, the strength of the β-axis magnetic flux differs in the upper gap and the lower gap when the rotational angle is 0 deg. and the radial suspension force Fβ is generated in the positive β-axis direction.

On the other hand, when the rotor is rotated at 45 deg., the radial suspension magnetic flux Ψs2β1 flows as shown in Fig. 6 and force F' is generated in two directions each being deviated from the β-axis by 45 deg. and thus the radial suspension force Fβin the β-axis direction becomes resultant force of the bidirectional force F'. Accordingly, the radial suspension force becomes greater compared to the case where θ=0 deg. and ripple is caused.

Further, ripple is caused in the radial suspension force due to the α-axis force generated by the rotor having a rotational angle at which the magnetic flux does not symmetrically flow with respect to the β-axis or by the interference between the motor magnetic flux generated by the motor current and the radial suspension magnetic flux. Accordingly, since it is difficult for this structure to prevent ripple and deflection in the radial suspension force, a new structure should be considered.

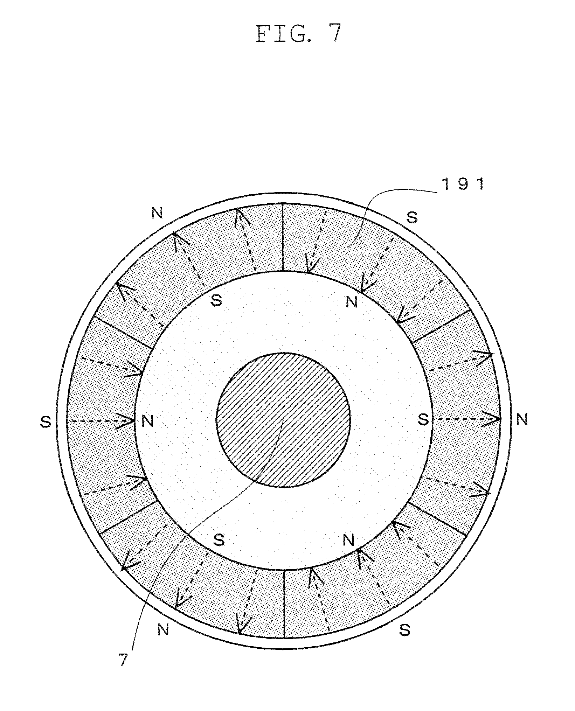

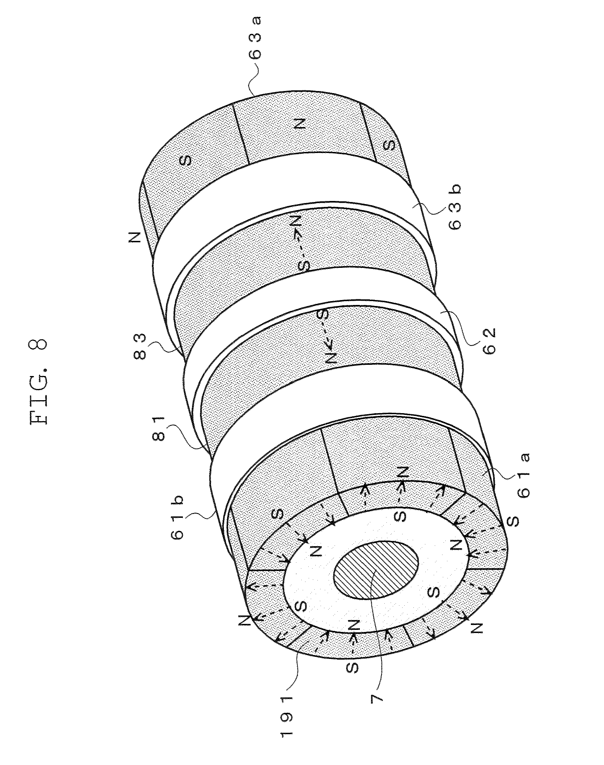

Next, a second embodiment of the present invention will be explained. The second embodiment of the present invention proposes the structure of the 5-axis active control type bearingless motor capable of preventing ripple and deflection in the radial suspension force, which is the second problem in the conventional structure, to realize stable magnetic levitation and rotation. Fig. 7 shows a front view of a rotor of a 5-axis active control type bearingless motor according to the second embodiment of the present invention, and Fig. 8 shows an overall perspective view of the rotor. Note that the same components as those in Fig. 1 and Fig. 2 are given the same symbols, and the explanation thereof will be omitted.

In each of Fig. 7 and Fig. 8, the rotor has six radial permanent magnets 191 radially magnetized in each of the axial left half 61a of the unit 101 and the axial right half 63a of the unit 103 to form a six-pole motor.

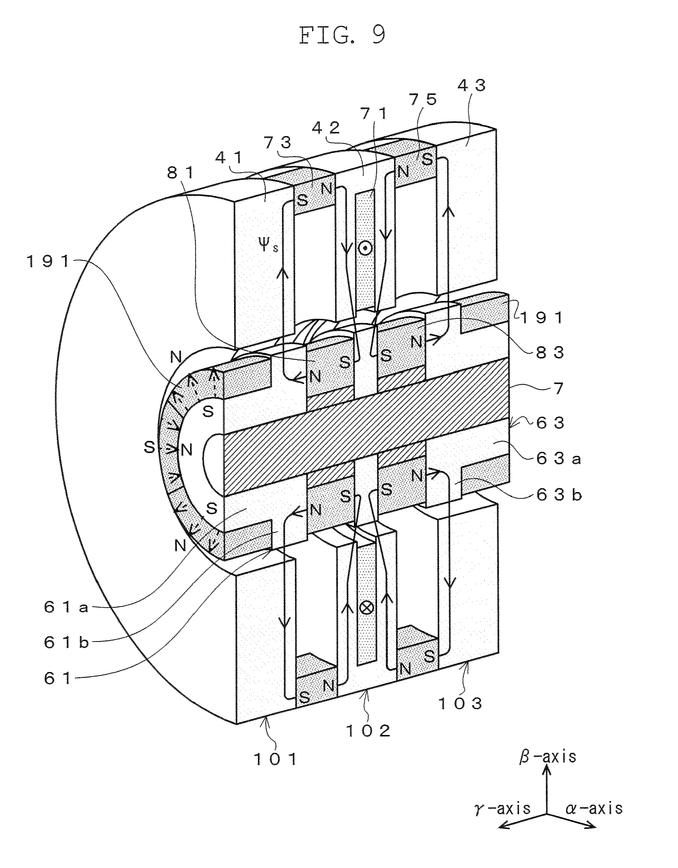

As shown in Fig. 8, the rotor unit is divided in the axial direction, and each of the axial right half 61b of the unit 101 and the axial left half 63b of the unit 103 is formed to have a cylindrical shape without any radial permanent magnet. Fig. 9 shows the entire motor unit. Similarly to the first embodiment, the bias magnetic flux Ψs is generated by the thrust permanent magnets 73, 75, 81, and 83 arranged on the stator and rotor between the units 101 and 103. The stator has six-pole motor windings and two-pole radial suspension windings.

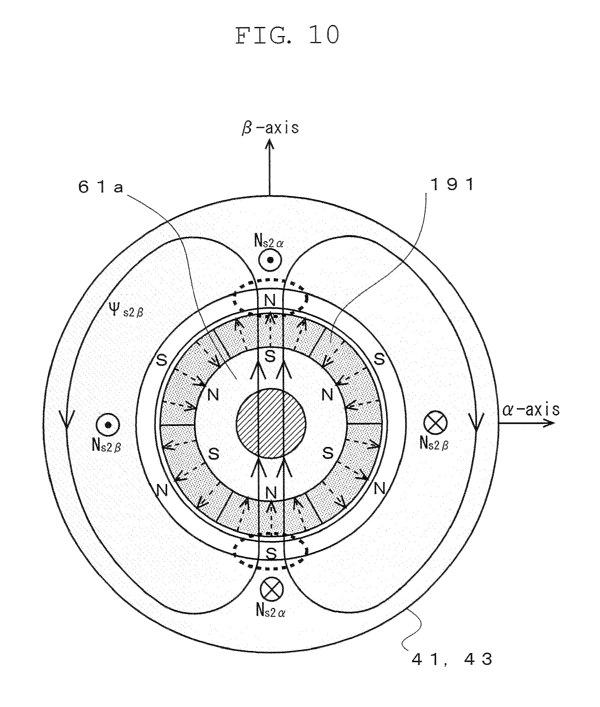

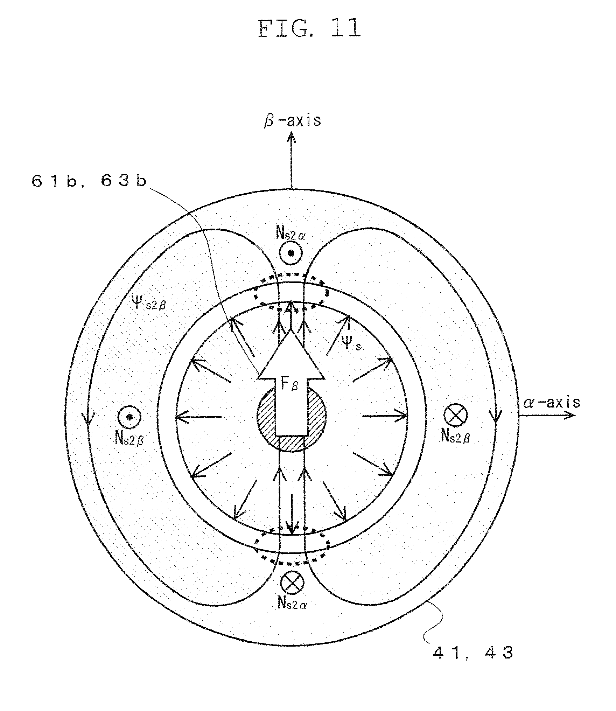

Each of Fig. 10 and Fig. 11 shows a principle of how the radial suspension force is generated in the 5-axis active control type bearingless motor according to the second embodiment of the present invention. As shown in Fig. 10, in the gap around the radial permanent magnets (corresponding to the axial left half 61a of the unit 101 and the axial right half 63a of the unit 103), the magnetic flux in the upper position and that in the lower position always flow in the same direction, by which the density of the magnetic flux in the upper gap does not differ from that in the lower gap even when the radial suspension magnetic flux Ψs2β is generated and thus the radial suspension force is not generated.

On the other hand, as shown in Fig. 11, in the cylindrical portion of the rotor (corresponding to the axial right half 61b of the unit 101 and the axial left half 63b of the unit 103), the bias magnetic flux radially flows from the rotor center, and thus the radial suspension magnetic flux is generated so that the density of the magnetic flux in the upper gap differs from that in the lower gap, thereby the radial suspension force Fβ being generated. In other words, the radial permanent magnets 191 do not make any contribution to generate the radial suspension force and the radial suspension force is generated only in the gap around the cylindrical portions of the axial right half 61b and the axial left half 63b, by which the radial suspension force does not ripple even when the rotational angle is changed.

Next, an analysis result of radial/thrust suspension force and torque characteristics of the 5-axis active control type bearingless motor according to the second embodiment of the present invention will be explained.
A 3D-FEM analysis is performed to verify if the 5-axis active control type bearingless motor of the second embodiment can prevent ripple and deflection in the radial suspension force.

Since the analysis of the thrust/radial suspension force characteristics performed in the first embodiment shows that the thrust suspension force is sufficiently great enough to largely exceed the target value, in the second embodiment, the thrust magnetic bearing unit 102 is made smaller than the model in the first embodiment while the axial length of the bearingless motor units 101 and 103 is made larger corresponding to the downsizing.

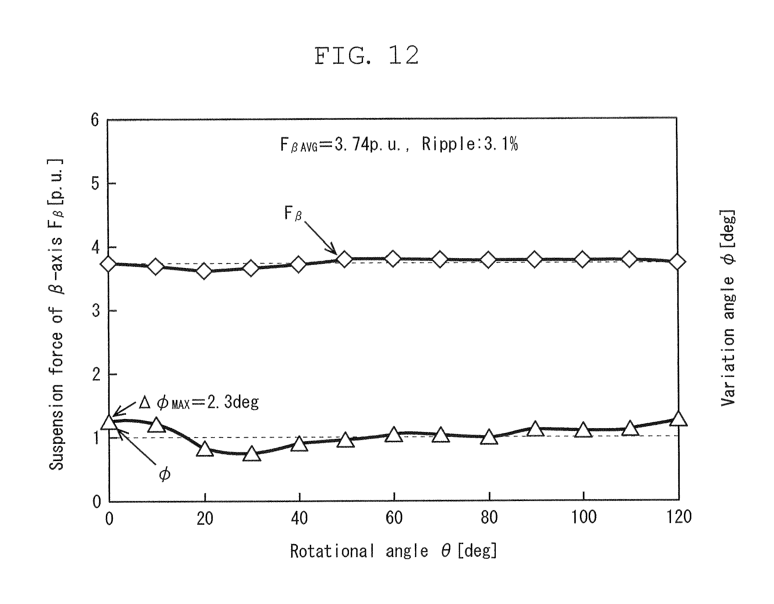

The analysis is performed under the current conditions similar to those shown in the first embodiment, and the rotor rotational angle θ = 0 to 120 deg. (at 10 deg. intervals). Fig. 12 shows radial suspension force characteristics. The radial suspension force Fβ in the β-axis direction is 3.74 p.u. on average while ripple ratio is 3.1%, which shows that ripple can be considerably prevented compared to a ripple ratio of 22.7% in the conventional structure.

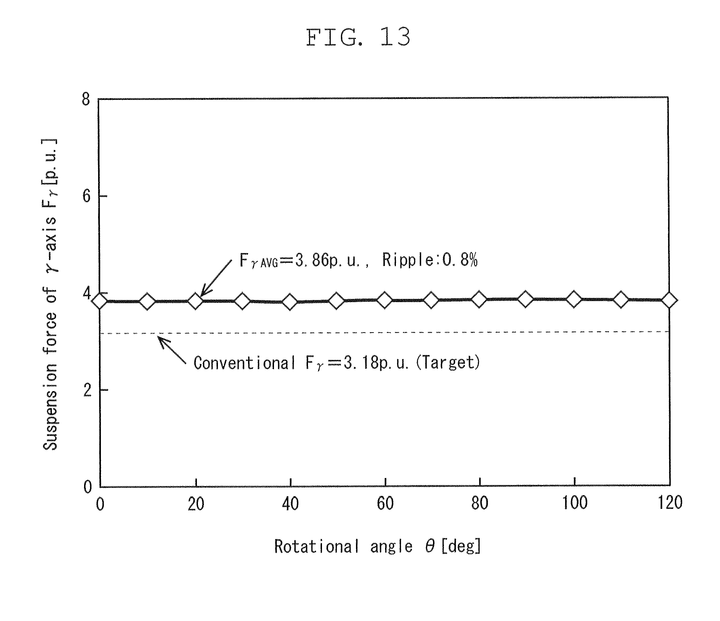

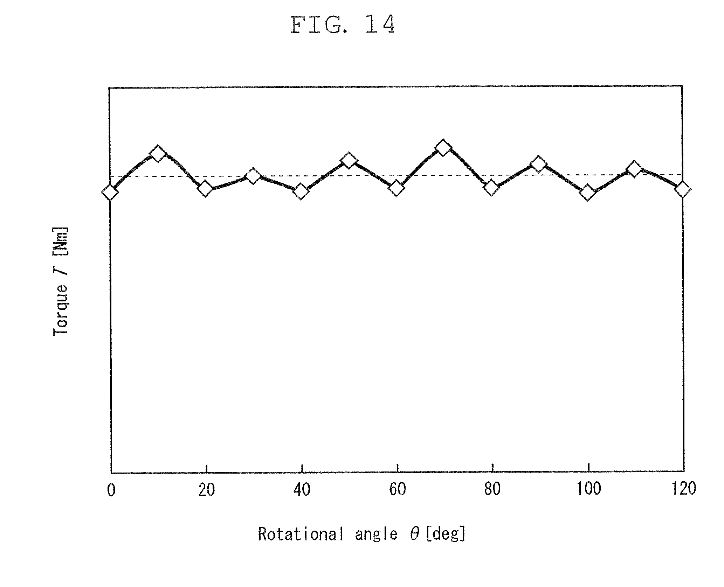

Further, the deflection ϕ is also prevented with a value of 2.3 deg., which shows that the structure of the second embodiment is effective to prevent ripple and deflection in the radial suspension force. Fig. 13 shows thrust suspension force characteristics. The thrust suspension force Fγ is 3.86 p.u. on average, which is sufficiently great enough to exceed the target value. The ripple ratio is 0.8%, which shows that the variation in force is extremely small when the rotor is rotated. Fig. 14 shows torque characteristics. A torque mean value TAVG is 2.32 Nm.

Next, the relationship between the motor torque current and the radial suspension force will be explained.

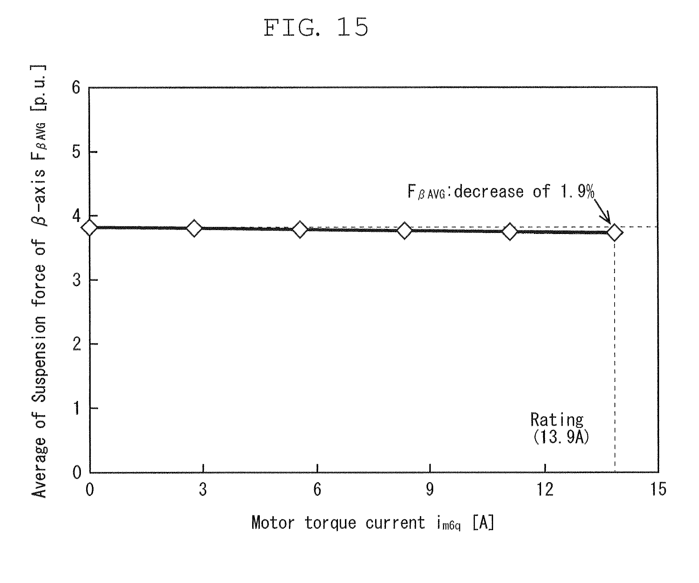

Fig. 15 shows a relationship between motor torque current im6q and a mean value FβAVG of the radial suspension force in the β-axis direction when the motor torque current im6q is changed.

FβAVG decreases by only 1.9% or so when im8q is increased from 0A to 13.9A (rated value). The change is extremely gradual and the variation in the radial suspension force when the motor torque current im6q changes is extremely small, which shows that the structure makes it possible to fairly stably perform radial suspension control.

Next, a comparative difference between the case where thrust suspension is passively controlled and the first and second embodiments, in both of which thrust suspension is actively controlled, will be explained based on experiment data.

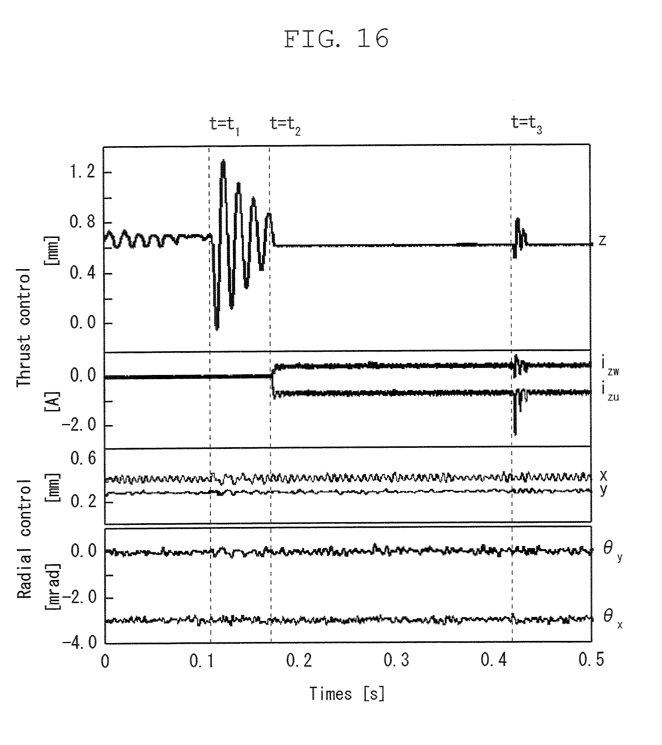

Fig. 16 shows starting characteristics of thrust suspension of the 5-axis active control type bearingless motor explained in the second embodiment. In Fig. 16, when t = 0 before performing control, the rotor is actively suspended in the radial directions of four axes and in the inclination direction. When t = t1, external force is applied and thrust vibration is generated in the rotor, which is because the rotor shaft is passively suspended in the thrust direction.

When t = t2, a switch for thrust active control is turned on. Then, the vibration is prevented by active thrust magnetic force generated by current. The difference in bias current between u-phase and w-phase is caused by the difference in a suspension force constant. When t = t3, external force is applied again. At this time, the rotor is suspended at a nearly constant position by thrust magnetic suspension current.

Referring to the thrust displacement in Fig. 16, the steady-state deviation in the period of 0<t<t1 where thrust suspension is passively performed is smaller than that in the period of t>t2 where thrust suspension is actively performed. Further, comparing the thrust displacements at t1 and t3 when vibration is applied, effective damping and quick response are performed in the period of t1<t<t2 where thrust suspension is passively performed compared to the period of t = t3 or later where thrust suspension is actively performed.

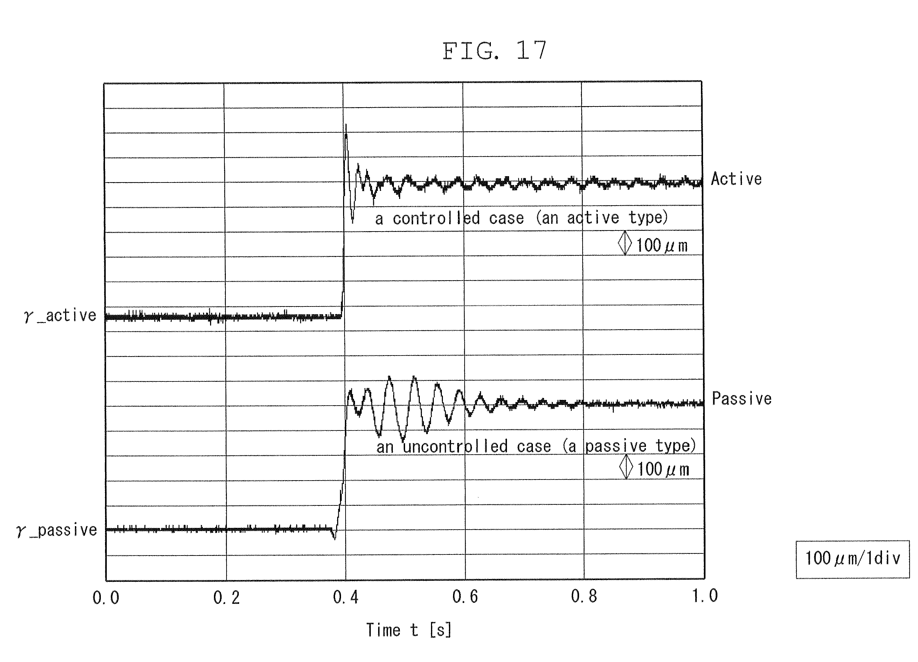

In order to make the above difference clearer, a comparison experiment similar to the above is performed by using another 5-axis active control type bearingless motor explained in the second embodiment. Fig. 17 shows a experiment result obtained by comparing a controlled case (corresponding to an active type) with an uncontrolled case (corresponding to a passive type). Similarly to the result of Fig. 16, Fig. 17 also shows that the active type is more excellent in steady-state deviation, damping, and response speed.

## Claims

1. A bearingless motor comprising:
a rotor;
a first bearingless motor unit having a first motor magnetomotive force generator for generating a rotational magnetomotive force to rotate the rotor and a first suspension magnetomotive force generator for generating a suspension magnetomotive force to suspend the rotor in a radial direction;
a second bearingless motor unit having a second motor magnetomotive force generator for generating a rotational magnetomotive force to rotate the rotor and a second suspension magnetomotive force generator for generating a suspension magnetomotive force to suspend the rotor in a radial direction;
a magnetic flux generator for generating a magnetic flux between the first bearingless motor unit and the second bearingless motor unit; and
a thrust force generator for generating a magnetomotive force in a thrust direction by adding or canceling the magnetic flux generated by the magnetic flux generator with respect to a magnetic flux of the first bearingless motor unit and a magnetic flux of the second bearingless motor unit.

2. A bearingless motor according to claim 1, wherein the rotor has permanent magnets so that the magnetomotive force in the thrust direction does not interfere with each of the suspension magnetomotive forces.

3. A bearingless motor comprising:
a first bearingless motor unit having a first stator formed by winding first motor windings and first suspension windings around a same core and a first rotor having first radial permanent magnets circumferentially arranged to be magnetized in a radial direction, the first rotor being arranged inside or outside the first stator to face the first stator with a predetermined gap therebetween;
a second bearingless motor unit having a second stator formed by winding second motor windings and second suspension windings around a same core and a second rotor having second radial permanent magnets circumferentially arranged to be magnetized in a radial direction, the second rotor being arranged inside or outside the second stator to face the second stator with a predetermined gap therebetween;
a thrust magnetic bearing unit having a third stator around which a thrust suspension winding is wound to surround a rotor shaft, the third stator being arranged between the first stator and the second stator, and a third rotor arranged inside or outside the third stator to face the third stator with a predetermined gap therebetween;
a first thrust permanent magnet which is arranged between the first stator and the third stator and is magnetized in an axial direction; and
a second thrust permanent magnet which is arranged between the second stator and the third stator and is magnetized in an axial direction,
wherein each of the first rotor and the second rotor is formed by connecting or combining, in an axial direction, a first rotor part having the radial permanent magnets and a second rotor part formed of a core without the radial permanent magnets, the second rotor part being connected to or combined with the third rotor.

4. A bearingless motor comprising:
a first bearingless motor unit having a first stator formed by winding first motor windings and first suspension windings around a same core and a first rotor having first radial permanent magnets circumferentially arranged to be magnetized in a radial direction, the first rotor being arranged inside or outside the first stator to face the first stator with a predetermined gap therebetween;
a second bearingless motor unit having a second stator formed by winding second motor windings and second suspension windings around a same core and a second rotor having second radial permanent magnets circumferentially arranged to be magnetized in a radial direction, the second rotor being arranged inside or outside the second stator to face the second stator with a predetermined gap therebetween;
a thrust magnetic bearing unit having a third stator around which a thrust suspension winding is wound to surround a rotor shaft, the third stator being arranged between the first stator and the second stator, and a third rotor arranged inside or outside the third stator to face the third stator with a predetermined gap therebetween;
a first thrust permanent magnet which is arranged between the first stator and the third stator and is magnetized in an axial direction;
a second thrust permanent magnet which is arranged between the second stator and the third stator and is magnetized in an axial direction;
a third thrust permanent magnet which is arranged between the first rotor and the third rotor and is magnetized in an axial direction; and
a fourth thrust permanent magnet which is arranged between the second rotor and the third rotor and is magnetized in an axial direction,
wherein each of the first rotor and the second rotor is formed by connecting or combining, in an axial direction, a first rotor part having the radial permanent magnets and a second rotor part formed of a core without the radial permanent magnets.
